# NEW EUROPEAN PATENT SPECIFICATION

(11) **EP 1 325 106 B2**
(45) Date of publication and mention of the opposition decision: **18.01.2017**
(45) Mention of the grant of the patent: 23.12.2009
(21) Application number: 01983192.4
(22) Date of filing: 12.10.2001
(51) Int. Cl.: C11D 17/04, D06F 39/02

(54) **MULTI-LAYER DYE-SCAVENGING ARTICLE**
MEHRSCHICHTIGER ARTIKEL ZUM AUFFANGEN VON FARBSTOFFEN
ARTICLE MULTICOUCHE DE PIEGEAGE DES COLORANTS

(30) Priority: 13.10.2000 US 240343 P
(43) Date of publication of application: 09.07.2003
(73) Proprietor: THE PROCTER & GAMBLE COMPANY, Cincinnati, OH 45202 (US)
(72) Inventor: PANANDIKER, Rajan, Keshav, West Chester, OH 45069 (US); AOUAD, Yousef, Georges, Cincinnati, OH 45213 (US); GORDON, Gregory, Charles, Cincinnati, OH 45231 (US); VETTER, Nicholas, David, Cincinnati, OH 45238 (US)
(74) Representative: Howard, Phillip Jan
(86) International application number: PCT/US2001/042686
(87) International publication number: WO 2002/031246

(56) References cited:
- EP-A- 0 325 944
- US-A- 4 254 139
- US-A- 4 380 453
- US-A- 4 494 264
- US-A- 5 881 412
- PATENT ABSTRACTS OF JAPAN vol. 1995, no. 04, 31 May 1995 (1995-05-31) & JP 07 024951 A (TORAY IND INC), 27 January 1995 (1995-01-27)

## Description

### FIELD OF THE INVENTION

This invention relates to a multi-layer dye-scavenging article for use in hand or machine washing systems. More particularly, this invention relates to a multi-layer article for introducing dye absorbing, dye transfer inhibiting and/or other detergent active materials into an aqueous washing system.

### BACKGROUND OF THE INVENTION

In recent years there has been much interest in developing products which prevent the transfer of dyes between articles or garments when being laundered. When articles or garments, which have been colored using dyes of poor wash fastness are washed together with other articles or garments undesirable dye transfer may occur. As a result the articles or garments affected are many times rendered unsuitable for further use.

As a result of the aforementioned problem, many attempts have been made in the art to inhibit the transfer of dyes in the wash. One such solution involves delivery of dye transfer inhibitors and/or introduction of dye absorbers into the wash via a disposable substrate such as a non-woven sheet. However, one problem associated with currently available dye-scavenging articles arises from their single layer construction. When these single layer articles are placed in the wash, the dye absorbents and/or dye transfer inhibitors affixed to the substrate come into direct contact with the fabrics being laundered. Many consumers find this contact undesirable because of the perception that residue from the chemicals may remain on the articles or garments after laundering. Additionally, it is perceived by consumers that this contact may damage the articles or garments. Further, these single layer dye-scavenging articles known in the art lack the physical strength or structure to maintain their shape throughout the wash cycle. As a result, the articles tend to fold-up, minimizing the surface area available to the wash solution and greatly reducing the effectiveness of the articles.

Known dye-scavenging articles such as those disclosed in US Patent No. 5,881,412, or WO-A-9626831 require that the dye absorbent be chemically affixed to the surface of a substrate material, typically cellulosic materials, for example, cotton in any of its forms, purified cotton cellulose, cellulose sponge and the like. To affix the dye absorbent, the cotton substrate is modified by phosphorylation and chemisorption of the dye absorbent. The modification of the substrate and chemically bonding of the dye absorbents adds complexity and cost to the process and the ultimate article. JP07024951 relates to a method of manufacturing a laminate, capable of being employed for a label and the like bonded to clothers.

Accordingly the need remains for a dye-scavenging article that can be used to efficiently introduce dye-scavenging and/or dye transfer inhibiting compounds or other detergent active materials to the wash solution. There remains an additional need for a dye-scavenging article which provides a protective barrier between the active compounds contained therein and the articles or garments being washed, while still providing adequate contact between the active and the wash solution. Additionally, the article must be easily and efficiently manufactured and have sufficient physical strength or stiffness to prevent it from folding during the wash cycle.

### SUMMARY OF THE INVENTION

The present invention meets the aforementioned needs by providing a multi-layer dye-scavenging article. When added to the wash solution, the dye-scavenging article prevents redeposition of fugitive dyes that may bleed from articles or garments in the solution. Multiple layers prevent contact between the articles or garments to be washed and the active compounds to be introduced into the wash solution. The physical strength or stiffness of the dye-scavenging article of the present invention prevents it from folding and thereby reducing its effectiveness.

In accordance with a first aspect of the invention a multi-layer dye-scavenging article is provided. The article comprises at least two layers oriented adjacently to each other and having one or more dye absorbing compound fixed to at least one layer. The article can comprise any number of additional layers. The multi-layer dye-scavenging article comprises (a) a first layer and (b) a second layer. The first layer has first and second surfaces. The first layer has a basis weight of from about 10 gram/square meter (gsm) to about 200 gsm, preferably from about 20 gsm to about 100 gsm, and most preferably from about 20 gsm to about 50 gsm. It is additionally preferred that the first layer have an opacity of less than 70%, preferably less than 50% and a water permeability of at least 0.06 ml/sec/cm², preferably at least 0.1ml/sec/cm². If it is desired that the dye-scavenging article be compatible in machine drying appliances then it is further preferred that the first layer have a melting point of greater than or equal to 100°C, preferably greater than or equal to 130°C.

The second layer of the multi-layer dye-scavenging article also includes first and second surfaces. The second layer has a basis weight of from about 30 gsm to about 200 gsm, preferably from about 60 gsm to about 150 gsm, and most preferably from about 80 gsm to about 120 gsm. It is additionally preferred, that the second layer have a water permeability of at least 0.06 ml/sec/cm², more preferably at least 0.1 ml/sec/cm². If it is desired that the dye-scavenging article be compatible in machine drying appliances then it is further preferred that the second layer have a melting point of greater than or equal to 100°C, more preferably greater than or equal to 130°C.

The multi-layer dye-scavenging article may optionally comprise (c) multiple additional layers. When present, the additional layers have first and second surfaces, a basis weight of from about 10 gsm to about 200 gsm, preferably from about 20 gsm to about 100 gsm, and most preferably from about 20 gsm to about 50 gsm. It is additionally preferred that the additional layers have an opacity of less than 70%, preferably less than 30% and a water permeability of at least 0.06 ml/sec/cm², preferably at least 0.1 ml/sec/cm². If it is desired that the dye-scavenging article be compatible in machine drying appliances then it is further preferred that the additional layers have a melting point of greater than or equal to 100°C, more preferably greater than or equal to 130°C.

The first layer is positioned adjacent to the second layer and any additional layers. In a preferred embodiment the second surface of the first layer is positioned adjacent to the first surface of the second layer. Additionally, the second surface of the second layer is positioned adjacent to the first surface of any optionally present additional layer. In another preferred embodiment of the present invention the first layer is coupled to the second layer and any additional layers. In another preferred embodiment the first, second and additional layers are non-woven materials.

It is therefore an object of the invention to provide a multi-layer dye-scavenging article which introduces dye absorbing and/or dye transfer inhibiting compounds to the wash solution. It is a further object of the present invention to provide a multi-layer dye-scavenging article that when added to the wash solution; prevents redeposition of fugitive dyes that may bleed from articles or garments in the solution. An additional object of the present invention is to provide a multi-layer dye-scavenging article that prevents contact between the articles or garments to be washed and the active compounds to be introduced into the wash solution. It is further an object of the present invention to provide a multi-layer dye-scavenging article with sufficient physical strength or stiffness to prevent it from folding and thereby reducing its effectiveness.

All percentages, ratios, and proportions herein are on a weight basis unless otherwise indicated.

### BRIEF DESCRIPTION OF THE DRAWINGS

Figure 1. is a cross sectional view of a multi-layer dye-scavenging article of the present invention.
Figure 2. is a cross sectional view of an alternative embodiment of a multi-layer dye-scavenging article of the present invention.
Figure 3. is a top view of a multi-layer dye-scavenging article of the present invention.

### DETAILED DESCRIPTION OF THE INVENTION

The present invention is directed to a multi-layer dye-scavenging article. More particularly, the present invention is directed to a multi-layer dye-scavenging article, which is capable of introducing dye absorbing, dye transfer inhibiting and/or other detergent active materials to the wash solution and additionally, providing a barrier between the actives fixed to at least one layer of the article and the articles and/or garments in the wash. Additionally, a dye-scavenging article of the present invention will have sufficient physical strength and/or structure to resist folding in the wash.

The present invention achieves the aforementioned benefits by providing a multilayer dye-scavenging article. The article comprises a first layer, a second layer and optionally additional layers, oriented adjacent to each other, wherein a dye absorbing, dye transfer inhibiting compound and/or other detergent active material is fixed to one of the first and second layers. In a preferred embodiment of the invention the article comprises a first layer, a second layer and a third layer, wherein a dye absorbing compound is fixed to both the first and second surfaces of the second layer, further wherein all the layers are coupled to each other such that the layers do not substantially separate during the wash cycle.

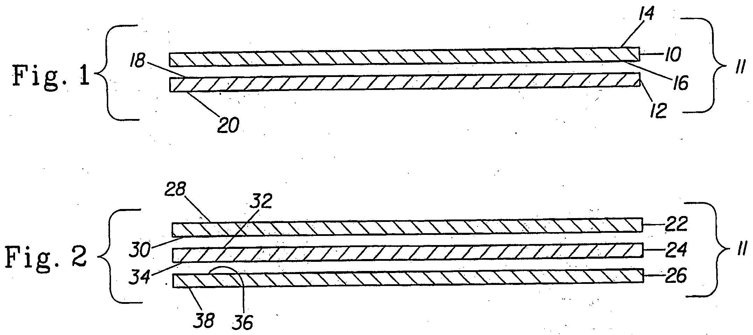

Turning now to FIG. 1, a multi-layer dye-scavenging article 11 comprises first layer 10, second layer 12, each layer having first and second surfaces, 14, 16,18 and 20 respectively. As will be understood, layer thicknesses have been exaggerated and are not to scale to aid in clearly depicting all of the layers in the article. The multi-layer dye-scavenging article 11 comprises a first layer 10 having first and second surfaces 14 and 16. First surface 14 is preferably directly exposed to the wash solution and the articles and/or garments being laundered. Second surface 16 preferably faces first surface 18 of second layer 12. First layer 10 has a basis weight of from about 10 gsm to about 200 gsm, more preferably from about 20 gsm to about 100 gsm, and most preferably from about 20 gsm to about 50 gsm. A basis weight of from about 10 gsm to about 200 gsm produces a layer with comfortable consumer aesthetics and adequate strength such that it maintains its structural integrity throughout the wash cycle. Additionally, having a basis weight from about 10 gsm to about 200 gsm, also provides satisfactory hand feel to the consumer.

It is additionally preferred that the first layer 10 have an opacity of less than about 70%, preferably less than about 50%. Where first layer 10 has an opacity of less than about 70% the consumer can see through first layer 10 to second layer 12 and view the dye absorbed from the wash solution on the second layer 12 of the article thereby providing a visual signal that fugitive dye is being absorbed. The multi-layer dye-scavenging article may comprise (a) at least a first layer wherein said first layer has an opacity of less than 70%; (b) a second layer; and (c) optionally additional layers; wherein a dye absorbing compound is fixed to the second layer.

It is further preferred that first layer 10 has a water permeability of at least 0.06 ml/sec/cm² to assure sufficient water is permitted to flow through first layer 10 and contact the dye absorbing and/or other detergent active material fixed to at least one other layer.

If it is desired that the dye-scavenging article be compatible for use in machine drying appliances then it is further preferred that first layer 10 have a melting point of greater than or equal to about 100°C, preferably greater than or equal to about 130°C.

The multi-layer dye-scavenging article 11 further comprises a second layer 12. The second layer 12 has first and second surfaces 18 and 20. The second layer 12 has a basis weight of from about 30 gsm to about 200 gsm, preferably from about 60 gsm to about 150 gsm, and most preferably from about 80 gsm to about 120 gsm. Second layer 12 also preferably has a water permeability of at least about 0.06 ml/sec/cm², preferably 0.1 ml/sec/cm². Additionally, if it is desired that the dye-scavenging article be compatible for use in machine drying appliances then it is further preferred that second layer 12 have a melting point of greater than or equal to 100°C, preferably greater than or equal to 130° C.

In a highly preferred embodiment of the present invention second layer 12 has a Taber stiffness rating of at least about 7 Taber Stiffness Units (TSU) preferably from about 10 TSU to about 200 TSU, and more preferably from about 10 TSU to about 100 TSU. When second layer 12 has the aforementioned stiffness rating, the resulting article has sufficient physical strength and rigidity such that it does not fold during the wash cycle, which can greatly reduce efficacy. The stiffness rating is preferably determined after any dye absorbing, dye transfer inhibiting or other detergent active material is fixed to the layer.

Dye adsorption and/or dye transfer inhibiting compounds are preferably fixed to second layer 12, however one of skill in the art will recognize that these compounds may be fixed to any layer. While this may be accomplished via any method, a preferred method includes liquefying the compounds and coating the first and second surfaces, 18 and 20 of second layer 12. Thereafter, the compounds are allowed to harden around the fibers of the second layer 12. When the multi-layer dye-scavenging article 11 comprises only a first layer 10 and a second layer 12, the dye absorbents or other detergent actives are preferably applied to the first surface 18 of the second layer 12.

In an optional embodiment of the present invention, multi-layer dye-scavenging article 11 may further comprise any number of additional layers. An especially preferred embodiment of the present invention represented by FIG. 2 shows a multilayer dye scavenging article 11 having a first layer 22, a second layer 24 and a third layer 26. The first layer 22, has first and second surfaces 28 and 30 respectively. The second layer 24 has first and second surfaces 32 and 34 respectively. The third layer 26 has first and second surfaces 36 and 38 respectively. When additional layers are present the dye absorbents and/or other detergent active materials are preferably applied to both the first surface 32 and the second surface 34 of second layer 26. Of course one of ordinary skill in the art will recognize that placement of dye absorbents and/or other detergent active materials on any layer is consistent with the present invention. A multi-layer dye-scavenging article with several layers may be provided, which have distributed between them several detergent actives. By providing an article with several layers one can deliver detergent active materials in the same product, which would otherwise be incompatible with each other by separating them by at least one layer. Suitable materials for all layers are described in detail below.

When present additional layers preferably have a basis weight of from about 10 gsm to about 200 gsm, more preferably from about 20 gsm to about 100 gsm, and most preferably from about 20 gsm to about 50 gsm. It is additionally preferred that additional layers have an opacity of less than about 70%, preferably less than about 50%. It is further preferred that additional layers have a water permeability of at least 0.06 ml/sec/cm², more preferably at least about 0.1 ml/sec/cm². If it is desired that the dye-scavenging article be compatible for use in machine drying appliances then it is further preferred that additional layers have a melting point of greater than or equal to about 100° C, preferably greater than or equal to about 130°C.

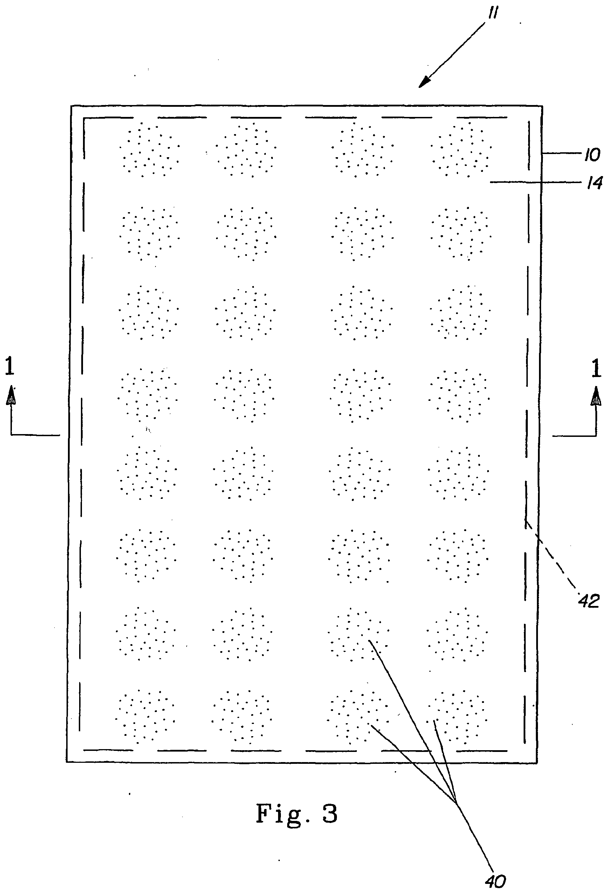

Turning now to FIG. 3 a top view of a multi-layer dye-scavenging article according to the present invention is shown. The multi-layer dye-scavenging article 11 is shown with first surface 14 of first layer 10 illustrated. Individual means for coupling 40 are placed evenly or randomly throughout the article to couple one layer to the next layer. Optionally, there is a continuous means for coupling 42 along the perimeter of the article. The couplings prevent the layers from substantially separating from each other during the wash cycle and reducing efficacy of the actives. Coupling may be achieved by any means known in the art, including but not limited to pressure bonding, adhesive bonding, sonic bonding etc. One of ordinary skill in the art will recognize that the pattern or placement of the couplings is not critical as long as they adequately prevent separation of the layers. Accordingly, various patterns or designs and any combination thereof are contemplated by the present invention.

Basis weight, opacity, water permeability, melting point and stiffness values of any material can be determined using the methods described below.

First and second layer, 10 and 12 and any additional layers of the present invention are preferably defined by several physical parameters including basis weight, opacity, water permeability, melting point and Taber stiffness rating.

Basis weight is calculated by cutting a sample of the material to be used for each respective layer and measuring its dimensions. The sample is then weighed. Basis weight is calculated by dividing the weight of the material by the square area of the material. A suitable measure of basis weight is grams per square meter (gsm). The basis weight of the material must be high enough to provide a substantial feel and thickness when handled by the consumer yet low enough such that the article moves with the articles and/or garments being washed.

Opacity is a relative percentage of how opaque, or transparent, a material is. This percentage may be determined using a Hunter Colorquest Spectrophotometer, commercially available from HunterLab. The opacity of all materials is measured when the materials are dry.

Water permeability is defined as the amount of water that passes through a material in a specified period of time. Sufficient water permeability can be accomplished either by using an entirely water pervious material, or alternatively by using a water impervious material supplied with holes, slits, apertures or other openings which allow water to flow from one side of the layer to the other. The water permeability of a particular material may be determined using the following method.

A 3.5in diameter Buchner funnel (diameter measured at base) is attached to a 2L vacuum flask. A vacuum source is not attached to the flask side arm. A sample that has been cut into a 3.5in diameter circle is placed into the bottom of the funnel. The sample is gently wetted with a small amount of water to prevent "floating" the sample. Add 100 mL of filtered deionized water to the funnel; starting a timer when the water is added. Stop the timer after all the water has drained from the funnel (evident by a lack of "puddles" formed in the funnel), and record the total number of seconds it took to drain completely. To get the permeability value, the # of seconds for the test is divided by 100, which results in mL/sec. Divide the result by 62.07, which is the surface area of the test sample in square centimeters. Water Permeability is expressed as mL/sec./cm².

It is preferred that layers directly adjacent to dye absorber or other detergent active have a water permeability of at least about 0.06 ml/sec/cm², preferably 0.1 ml/sec/cm², to allow a high volume of water to penetrate the article such that the actives within the article are effective. It is additionally preferred that all article layers have water permeabilities of at least about 0.06 ml/sec/cm², preferably 0.1 ml/sec/cm². However, one of ordinary skill in the art will recognize the possibility that the article contain some layers that are completely impermeable for the purpose of separating incompatible detergent active materials. In such a case the article would comprise a combination of water permeable and impermeable layers. This is within the scope of the present invention so long as sufficient release of detergent active material is permitted. By sufficient release is meant that portion of detergent active material necessary to achieve the desired benefit. It will be recognized by one of skill in the art that the amount of detergent active material necessary to be released into the wash solution will vary depending on the active and the desired benefit.

Melting point is the temperature at which the material begins the transition from solid state to liquid state. This can be determined by using ASTM method #E 324-94. All layers of the multi-layer article of the present invention preferably have a melting point of greater than or equal to 100°C. This melting point is necessary to ensure that the article retains its integrity through the wash and most importantly does not melt in the heat of a standard, commercially available home laundry dryer.

Taber stiffness rating is a measure of a materials stiffness and resiliency. This rating can be determined using a Taber Stiffness Tester Model #150-E, available commercially from Taber Industries.

The layers used in the articles of the present invention may preferably have a thickness varying from about 5 to about 500 mils, preferably from about 5 to about 250, and most preferably from about 5 to about 200. Examples of suitable materials which may be employed, include, among others, foam, foil, film, sponge, paper, woven cloth; and nonwoven cloth. Preferred articles are made from a flexible material; and include those made from paper, woven cloth, nonwoven cloth and flexible films. The term "cloth", as used herein, means a woven or nonwoven fabric or cloth used as an article, in order to distinguish it from the term "fabric" which is used to mean the textile fabric to be laundered. Preferred article materials should exhibit only a minimal amount of linting when used in automatic washers and dryers. Preferably, the materials employed in the articles of the present invention are wet-strength paper or nonwoven cloth materials.

Paper materials which can be employed herein encompass the broad spectrum of known paper structures and are not limited to any specific papermaking fiber or wood pulp. Thus, the fibers derived from soft woods, hard woods, or annual plants, such as bagasse, cereal straw, and the like, and wood pulps, such as bleached or unbleached kraft, sulfite, soda ground wood, or mixtures thereof, can be used. Moreover, the paper article materials, which may be employed in the articles of the present invention are not limited to specific types of paper, so long as the paper exhibits the required physical characteristics as defined above.

A specific example of a type of paper article material preferred herein is a two-ply paper having a basis weight of about 50 pounds per 2,880 sq. ft. made from, for example, a mixture of ground wood and kraft bleached wood pulps. Another example is the absorbent, multi-ply toweling paper which is disclosed in U.S. Pat. No. 3,414,459.

The preferred nonwoven cloth materials which may be used in the invention herein are generally defined as adhesively bonded fibrous products, having a web or corded fiber structure (where the fiber strength is suitable to allow carding) or comprising fibrous mats, in which the fibers are distributed haphazardly or in a random array (that is, an array of fibers in a carded web wherein partial orientation of the fibers is frequently present as well as a completely haphazard distributional orientation) or substantially aligned. The fibers can be natural, such as wool, silk, jute, hemp, cotton, linen, sisal, or ramie; or synthetic, such as rayon, cellulose ester, polyvinyl derivatives, polyolefins, polyamides, or polyesters. Any diameter or denier of fiber, generally up to about 10 denier, are useful in the present invention.

Methods of making nonwoven cloths suitable for use herein are not a part of this invention and, being well known in the art, are not described in detail in this application. Generally, such cloths are made by dry- or water-laying processes in which the fibers are first cut to desired lengths from long strands, conveyed via air or water, and then deposited onto a screen through which the fiber-laden air or water is passed. The deposited fibers are then adhesively bonded together, dried, cured, and otherwise treated as desired to form the nonwoven cloth. Nonwoven cloths made of polyesters, polyamides, vinyl resins, and other thermoplastic fibers can be spun bonded. In this process the fibers are spun out onto a flat surface and bonded (melted) together by heat or by a chemical reaction.

When the article described herein is a nonwoven cloth made from fibers deposited haphazardly or in a random array on a screen, the articles exhibit excellent strength in all directions and are not prone to tear or separate when used successively in an automatic washer and dryer.

Preferably, the nonwoven cloth is water-laid or dry-laid and is made from cellulosic fibers, particularly from regenerated cellulose or rayon, which have been lubricated with a standard textile lubricant. It is preferred that the fibers are from about 3/16 inch to about 2 inches in length, and are from about 1.5 to about 5 denier. It is also preferred that the fibers are at least partially oriented haphazardly, particularly substantially haphazardly, and are adhesively bonded together with a hydrophobic or substantially hydrophobic binder resin, particularly with a non-ionic self-crosslinking acrylic polymer or a mixture of such polymers. A preferred cloth comprises by weight about 85% fiber and about 15% binder resin polymer, and has a basis weight of from about 50 to about 90 grams per square yard.

If the articles are formulated so as to be used in the automatic dryer, subsequent to their use in the automatic washer, the materials used may be formed such that they have slit or aperture openings in order to improve their functioning in the dryer. These openings may also improve the release of the surface-active composition in the automatic washer. However, in order to be used in the articles of the present invention, it is desirable that the article materials meet the air permeability criteria set forth herein in the absence of the slits. Such openings are described in U.S. Pat. No. 3,944,694, McQueary, issued Mar. 16, 1976; U.S. Pat. No. 3,956,556, McQueary, issued May 11, 1976; U.S. Pat. No. 4,007,300, McQueary, issued Feb. 8,1977, and U.S. Pat. No. 4,012,540, McQueary, issued Mar. 15, 1977.

The articles usable herein can be "dense", or they can be open and have a high amount of "free space", as long as they satisfy the previously defined physical criteria. Free space, also called "void volume", is that space within an article structure which is unoccupied. For example, certain absorbent, multi-ply paper structures comprise plies embossed with proturberances, the ends of which are mated and joined. This type of paper structure has free space between the unembossed portions of the plies, as well as between the fibers of the paper plies themselves. A nonwoven cloth also has such space between its fibers. The free space of the article can be varied by modifying the density of the fibers of the article. Thus, articles with a high amount of free space generally have low fiber density, and articles having a high fiber density generally have a low amount of free space. The amount of free space, that a material has is not critical to its use as an article herein, although it may have a direct effect on the water permeability of the article material. Additionally, the amount of free space in the article structure may affect the amount of the active components, which must be applied to the article in order to achieve a desired coating effect.

In a preferred embodiment, the layers are superimposed upon each other. For the purposes of illustration only and not to limit the invention only the first two layers will be discussed in this section. However, the means of superimposition and coupling are to be understood to apply to all layers in the article. The first layer 10 is preferably superimposed on the second layer 12 and any additional layers. To insure proper fluid transfer between the first layer 10 and the second layer 12 it is preferred that the first layer 10 be substantially coupled to the underlying second layer 12. (As used herein, the term "coupled" encompasses configurations whereby a layer is directly secured to another layer by coupling one layer to the other layer, as well as configurations whereby a layer is indirectly secured to another layer by coupling the layer to an intermediate member or members which in turn are coupled to the other layer.) By coupling the first layer 10 to the second layer 12 the first layer 10 will have a reduced tendency to separate from the second layer during the course of a wash/dry cycle. Separation of the second layer 12 from the first layer 10 may inhibit or reduce the efficiency of dye absorption from the wash solution. The first layer may be coupled to the second layer by any suitable means, including, but not limited to the use of adhesives such as by spray-gluing or applying lines or spots of adhesives between the first layer 10 and the second layer 12. Alternatively, or additionally, the first layer 10 may be coupled with the second layer 12 simply by wrapping the first layer 10 about the second layer 12, by entangling the fibers of the second layer 12 with the first layer 10, by fusing the first layer 10 to the second layer 12 with a plurality of discrete individual fusion bonds, or by any other means known in the art including but not limited to adhesives, heat, pressure, heat and pressure, extrusion, and ultrasonic bonds.

A suitable first layer 10 may be manufactured from a wide range of materials such as woven and nonwoven materials; polymeric materials such as apertured formed thermoplastic films, apertured plastic films, and hydroformed thermoplastic films; porous foams; reticulated foams; reticulated thermoplastic films; and thermoplastic scrims. Suitable woven and nonwoven materials can be comprised at least partially of natural fibers (e.g., wood or cotton fibers), synthetic fibers (e.g., polymeric fibers such as polyester, polypropylene, or polyethylene fibers) or from a combination of natural and synthetic fibers.

Preferred materials for use in the first layer 10 are selected from high loft nonwoven materials and apertured formed film materials. Apertured formed films are especially preferred for the first layer 10 because they are pervious to water. Suitable formed films are described in U.S. Patent 3,929,135, entitled "Absorptive Structures Having Tapered Capillaries", which issued to Thompson on December 30, 1975; U.S. Patent 4,324,246 entitled "Disposable Absorbent Article Having A Stain Resistant Topsheet", which issued to Mullane, et al. on April 13, 1982; U.S. Patent 4,342,314 entitled "Resilient Plastic Web Exhibiting Fiber-Like Properties", which issued to Radel, et al. on August 3, 1982; U.S. Patent 4,463,045 entitled "Macroscopically Expanded Three-Dimensional Plastic Web Exhibiting Non-Glossy Visible Surface and Cloth-Like Tactile Impression", which issued to Ahr et al. on July 31, 1984; U.S. Patent 4,780,352 entitled "Covering Structure For Absorbent Hygienic Sanitary Products, and an Absorbent Product Having Such A Covering", which issued to Palumbo on October 25, 1988; U.S. Patent 5,006,394 "Multilayer Polymeric Film" issued to Baird on April 9, 1991.

It is possible that any layer be made of a hydrophobic material. While not necessary it may be desirable to treat the surface of any hydrophobic layer to increase its hydrophilic nature, such that liquids will transfer through that layer more rapidly. This diminishes the likelihood that the wash solution will flow around the layer rather than being drawn through the layer and into contact with the next layer or the detergent active. A layer can be rendered hydrophilic by treating it with a surfactant. Suitable methods for treating the layer with a surfactant include spraying the layer with the surfactant or immersing it in the surfactant. Suitable methods of treating a layer with a surfactant are described in U.S. Patent 4,950,254 issued to Osborn and in U.S. Patent 5,520,875.

Any of several known manufacturing techniques may be used to manufacture each layer.

In another embodiment, the first layer is an apertured formed film which comprises microscopic surface aberrations on the land areas of the formed film. The film also includes microscopic depositions of a low surface energy material at least some of which depositions are located on the land areas between the microscopic surface aberrations. Such a preferred apertured formed film is more fully described in allowed U.S. Patent Application Serial No. 08/826,508 entitled "Fluid Transport Webs Exhibiting Surface Energy Gradients" filed in the name of Ouellette, et al. on April 11, 1997 (PCT Publication WO 96/00548, published January 11, 1996).

The layers may also be comprised of a web material. The term "web", as used herein, refers to a sheet-like material comprising a single layer of material or a laminate of two or more layers. The web may be comprised of a structural elastic-like film (SELF) web material in a stretched or elongated condition. Examples of SELF webs are disclosed in International Application WO 95/03765, entitled "Web Materials Exhibiting Elastic-Like Behavior", published February 9, 1995 in the name of Chappell et al. which is incorporated herein by reference. The web materials can be constructed of a single layer of material or alternatively, may be constructed of two or more layers.

Suitable web materials for a layer may be comprised of polyolefins such as polyethylenes, including linear low density polyethylene (LLDPE), low density polyethylene (LDPE), ultra low density polyethylene (ULDPE), high density polyethylene (HDPE), or polypropylene and blends thereof with the above and other materials. Examples of other suitable polymeric materials which may also be used include, but are not limited to, polyester, polyurethanes, compostable or biodegradable polymers, heat shrink polymers, thermoplastic elastomers, metallocene catalyst-based polymers (e.g., INSITE^{®} available from Dow Chemical Company and EXXACT^{®} available from Exxon), and breathable polymers. The web materials may also be comprised of a synthetic woven, synthetic knit, nonwoven, apertured film, macroscopically expanded three-dimensional formed film, absorbent or fibrous absorbent material, foam filled composition or laminates and/or combinations thereof. The nonwovens may be made but not limited to any of the following methods: spunlace, spunbond, meltblown, carded and/or air-through or calender bonded, with a spunlace material with loosely bonded fibers being the preferred embodiment.

The web materials may be made from two-dimensional apertured films and macroscopically expanded, three-dimensional, apertured formed films. Examples of macroscopically expanded, three-dimensional, apertured formed films are described in U.S. Patent 3,929,135 issued to Thompson on December 30, 1975; U.S. Patent 4,324,246 issued to Mullane, et al. on April 13, 1982; U.S. Patent 4,342,314 issued to Radel, et al. on August 3, 1982; U.S. Patent 4,463,045 issued to Ahr, et al. on July 31, 1984; and U.S. Patent 5,006,394 issued to Baird on April 9, 1991.

The web materials may comprise laminates of apertured films and nonwoven materials whereby in the process of forming such materials, the connections between a plurality of the nonwoven fibers are broken up to protrude slightly through the apertures of the apertured film.

It may be desirable in certain embodiments to have the composite web exhibit a certain degree of bulkiness and bending resistance. Laminates of polymer films with high-loft nonwoven materials, and laminates with multi-layers of nonwovens are ways of providing increased bulk. Other methods for creating bulk include the formation of a single layer of polymer film in the manner of this invention followed by prestretching of the film and subsequent application of the nonwoven to one or both sides while the polymer film is in its prestretched condition. Upon relaxation of the stretch, the nonwoven material forms puckers which give the material added bulk. Another method for making bulky laminates is by forming individual polymeric film layers in the manner of this invention, followed by lamination of multiple layers of these materials. Three dimensionally apertured films that have been formed using the method described herein also provide good bulk in a laminate structure.

Cellulosic nonwovens, particularly nonwovens wherein the fibrous material consists essentially of cellulosic products, are economically and environmentally preferred. Cellulosic nonwovens that are especially suitable for use in the present invention are described in U.S. Patent 3,905,863 issued to Ayers on September 16, 1975; U.S. Patent 3,974,025 issued to Ayers on August 10, 1976; and U.S. Patent 4,191,609 issued to Trokhan on March 4, 1980.

Each layer of the multi-layer article may be formed from similar or different materials. The nonwoven may be treated, for example, to join the fibers of the nonwoven or to enhance the strength of the nonwoven. Such treatment may involve hydroentanglement, thermal bonding, or treatment with a binder.

Examples of preferred materials are tissue paper having a basis weight of about 40 gsm made with northern softwood Kraft pulp, or Hydraspun™ from Dexter Corporation, a hydroentangled wet laid nonwoven having a basis weight of 60 gsm, or Visorb™ commercially available from Buckeye Technologies, which is an air laid non-woven comprised of 72% wood pulp, 25% bicomponent fibers and 3% latex and has a basis weight of 100 gsm.

Each layer of the material may be a discrete composition which may or may not be the same or similar to any other layer of the article. Any number of additional layers may be used.

In an alternative embodiment of the present invention the multiple layers of the dye-scavenging article described herein are produced in succession on a single web. As described above, the layers of the article can be produced independently of one another and afterward combined via any known adhesive means to form a multi-layer article. However, it is possible and in some cases desirable to produce a multi-layer article wherein all or some of the layers are produced in the form of a single web. For instance with a standard non-woven machine it is possible to lay down each different layer in succession on a single air-laid line such that the web leaving the line, while being a single roll of material, is comprised of multiple layers each having distinct physical characteristics.

It is preferred that the dye absorber is a substantially insoluble cross-linked polymeric amine, selected from existing polymers, polymeric amines formed by copolymerization, polymeric amines formed by cross-linking soluble polyamines, or polymeric amines formed by reacting cationic condensates of amines with cross-linking agents. In a preferred embodiment the dye absorber can be grafted onto the dye scavenging article by any suitable grafting technique, including but not limited to chemical, thermal, and ultraviolet grafting techniques. Specific dye absorbing compounds and methods for making are described WO 02/33040 titled Laundering Aid for Preventing Dye Transfer, filed October 13, 2000.

The following examples are presented to further illustrate, but not to limit, the present invention:

### Example 1

A mixture of the following composition is prepared:

| | % by weight |
|---|---|
| Polyvinyl pyrrolidone co-vinyl imidazole¹ | 15.0 |
| PAE resin² | 3.75 |
| Polyvinylpyridine N oxide | 2.5 |
| tripropylolpropane triglycidylether | 1.0 |
| Water/Inerts | to 100% |
| 1: sold under the trade name Sokolan HP 56 by BASF AG, Germany | |
| 2: sold under the trade name Kymene 557H by Hercules Inc. Wilmington DE. | |

The solution is padded on a Visorb X622 (basis weight 100gsm, ex Buckeye Technologies, Memphis TN) using a Werner Mathis 2 roll Padding Machine Model HVF. The nip pressure was set so as to achieve a pickup of about 190%. The padded substrate is dried and cured in a convection oven at 250°F for 20 minutes

### Example 2

A three layer dye-scavenging article was prepared as follows:
Layer 1: 18gsm Softex 50% polypropylene/50% polyethylene from BBA Nonwovens,
Layer 2: 100 gsm Visorb X622 with crosslinked polymer from example 1
Layer 3: 18gsm Softex Softex 50% polypropylene/50% polyethylene from BBA Nonwovens

The three layers are coupled such that layer 2 forms the core and layers 1 and 3 form each of the outer layers. The perimeter of the article is thermally sealed. The layers are also bonded together by sonic bonding. The physical properties of the three layers are shown below

| | % Opacity | Water Permeability (mL/sec/cm²) | Taber Stiffness Rating |
|---|---|---|---|
| Layers 1 & 3 | 29 | 0.20 | Not applicable |
| Ply 2 | Not applicable | 0.23 | 26.7 |

### Example 3

A mixture of the following composition is prepared:

| | % by weight |
|---|---|
| Polyvinyl pyrrolidone co-vinyl imidazole¹ | 15.0 |
| PAE resin² | 3.75 |
| Polyvinylpyridine N oxide | 2.5 |
| tripropylolpropane triglycidylether | 1.0 |
| Water/Inerts | to 100% |
| 1: sold under the trade name Sokolan HP 56 by BASF AG, Germany | |
| 2: sold under the trade name Kymene 557H by Hercules Inc. Wilmington DE. | |

The solution is padded on a Bounty Rinse and Reuse™ Tissue paper (basis weight 21gsm, ex Procter and Gamble, Cincinnati, OH) using a Werner Mathis 2 roll Padding Machine Model HVF. The nip pressure was set so as to achieve a pickup of about 120%. The padded substrate is dried and cured in a convection oven at 250°F for 20 minutes.

### Example 4:

A five layer dye-scavenging article is prepared as follows:
Layer 1: 18gsm Softex 50% polypropylene/50% polyethylene from BBA Nonwovens,
Layers 2,3 and 4: 21gsm polymer coated Bounty Rinse and Reuse™ Tissue paper from example 3
Layer 5: 18gsm Softex 50% polypropylene/50% polyethylene from BBA Nonwovens

Layers 2-4 are coupled together such that they form the core and layers 1 and 5 form each of the outer layers. The perimeter is glued using a hot melt water resistant glue. The layers are also point bonded together with the glue. The physical properties of the layers are shown below

| | % Opacity | Water Permeability (mL/sec/cm²) | Taber Stiffness Rating |
|---|---|---|---|
| Layers 1 and 5 | 29 | 0.20 | Not applicable |
| Layers 2-4 | Not applicable | 0.23 | 11.5 |

### Examples 5-18

Examples 5-18 exemplify non-wovens suitable for use as the first layer and/or any optional additional layers of the multi-layer dye scavenging article.

A multi-layer dye scavenging article is produced as shown in example 1 with the following webs

| | Layer 1 | Layer 2 | Layer 3 |
|---|---|---|---|
| Example 5 | Apertured hexagonal film, dot embossed Code ER41 ex. PGI | layer from example 1 | Apertured hexagonal film, dot embossed Code ER41 ex. PGI |
| Example 6 | Spunlace, 70% Rayon/ 30%polyester, code 5763 ex. PGI | layer from example 1 | Spunlace, 70% Rayon/ 30%polyester, code 5763 ex. PGI |
| Example 7 | SMS ex. PGI Inc. | layer from example 1 | SMS ex. PGI |
| Example 8 | Softex, 40gsm ex. BBA Nonwovens | layer from example 1 | Softex, 40gsm ex. BBA Nonwoven |
| Example 9 | 1.0 mil Apertured film code X-26909 ex. Tredegar | layer from example 1 | 1.0 mil Apertured film code X-26909 ex. Tredegar |
| Example 10 | Three layered apertured web polypopylene/Tissue/ pro | layer from example 1 | Three layered apertured web polypopylene/Tissue/ pro |
| Example 11 | Through-Air Bond 60% pulp/ 40% Dankalon code 4093 ex. PGI | layer from example 1 | Through-Air Bond 60% pulp/ 40% Dankalon code 4093 ex. PGI |
| Example 12 | Thermal Bond T-Bond Cuff code 67700 ex. PGI | layer from example 1 | Thermal Bond T-Bond Cuff code 67700 ex. PGI |
| Example 13 | Apertured hexagonal film, dot embossed Code ER41 ex. PGI | layer from example 1 | Absent |
| Example 14 | 1.0 mil Apertured film code X-26909 ex. Tredegar | layer from example 1 | Absent |

| **Comparative Examples** | | | |
|---|---|---|---|
| Example 15 | Spunlace 55% Pulp/ 45% Polyester code 5529 ex. PGI | layer from example 1 | Spunlace 55% Pulp/45% Polyester code 5529 ex. PGI |
| Example 16 | Thermal Bond Polypropylene/ rayon code 149189 ex BBA Nonwovwns | layer from example 1 | Thermal Bond Polypropylene/ rayon code 149189 ex BBA Nonwovens |
| Example 17 | Polyethylene film 1.0 mil | layer from example 1 | Polyethylene film 1.0 mil |
| Example 18 | Saran Wrap | layer from example 1 | Saran Wrap |

The physical properties of layers 1 and 2 are shown in the table below

| | % Opacity | Water Permeability (mL/sec/cm²) |
|---|---|---|
| Example 5 | 45.5 | 0.40 |
| Example 6 | 59.7 | 0.25 |
| Example 7 | 36.8 | 0.05 |
| Example 8 | 42.7 | 0.20 |
| Example 9 | 7:7 | 0.09 |
| Example 10 | 60.5 | 0.32 |
| Example 11 | 33.9 | 0.32 |
| Example 12 | 34.7 | 0.14 |
| Example 13 | 45.5 | 0.40 |
| Example 14 | 7.7 | 0.09 |
| Example 15 | 71.9 | 0.07 |
| Example 16 | 71.7 | 0.18 |
| Example 17 | 0.2 | <0.01 |
| Example 18 | 1.5 | <0.01 |

### Examples 19-28

Examples 19-28 exemplify materials suitable for use as layer 2.

| | Layer 1 | Layer 2 | Layer 3 |
|---|---|---|---|
| Example 19 | 18gsm Softex 50% polypropylene/50% polyethylene from BBA Nonwovens | Visorb 110gsm 25% bicomponent fiber, 72% pulp, 3% latex ex.Buckeye Technologies, Memphis, TN treated with crosslinked polymer as shown in Example 1 | 18gsm Softex 50% polypropylene/50% polyethylene from BBA Nonwovens |
| Example 20 | 18gsm Softex 50% polypropylene/50% polyethylene from BBA Nonwovens | Visorb 155 gsm 25% bicomponent fiber, 72% pulp, 3% latex ex.Buckeye Technologies, Memphis, TN | 18gsm Softex 50% polypropylene/50% polyethylene from BBA Nonwovens |
| Example 21 | 18gsm Softex 50% polypropylene/50% polyethylene from BBA Nonwovens | Airlaid 80% pulp, 20% bonding fiber product code GH.100.1006 ex Concert, Germany | 18gsm Softex 50% polypropylene/50% polyethylene from BBA Nonwovens |
| Example 22 | 18gsm Softex 50% polypropylene/50% polyethylene from BBA Nonwovens | Wetlaid 60%pulp/40% polyester code 7925 PGI Chicopee treated with crosslinked polymer as shown in Example 1 | 18gsm Softex 50% polypropylene/50% polyethylene from BBA Nonwovens |
| Example 23 | 18gsm Softex 50% polypropylene/50% polyethylene from BBA Nonwovens | Wetlaid 40%pulp/60% polyester code 7945 PGI Chicopee treated with crosslinked polymer as shown in Example 1 | 18gsm Softex 50% polypropylene/50% polyethylene from BBA Nonwovens |
| Example 24 | 18gsm Softex 50% polypropylene/50% polyethylene from BBA Nonwovens | Tissue paper (basis weight 60 gsm ex. Procter and Gamble, Cincinnati, OH) treated with polymer as shown in example 3 | 18gsm Softex 50% polypropylene/50% polyethylene from BBA Nonwovens |
| Example 25 | 18gsm Softex 50% polypropylene/50% polyethylene from BBA Nonwovens | Hydroentangled web (50 gsm) sold under the trade name Hydraspun ex. Dexter Corp. Windsor Locks, CT treated with polymer as shown in Example 3 | 18gsm Softex 50% polypropylene/50% polyethylene from BBA Nonwovens |
| Comparative examples | | | |
| Example 26 | None | Glowhite Color catcher supplied by Acdo, Bolton, England | none |
| Example 27 | | Visorb 103g/sq m. 16% bicomponent fiber, 81 % pulp, 3% latex ex.Buckeye Technologies, Memphis, TN | |
| Example 28 | | 2 layers of Tissue paper, each of basis weight 19 g/sqm sold under the Trade name Bounty Rinse and reuse™ ex. Procter and Gamble, Cincinnati, OH) | |

| | Water Permeability (mL/sec/cm²) | TaberStiffness Rating |
|---|---|---|
| Example 19 | 0.2 | 26.4 |
| Example 20 | 0.3 | 13.3 |
| Example 21 | 0.2 | 7.8 |
| Example 22 | 0.06 | 22.5 |
| Example 23 | 0.05 | 21.3 |
| Example 24 | 0.2 | 25.6 |
| Example 25 | 0.3 | 8.2 |
| Example 26 | 0.2 | 6.1 |
| Example 27 | 0.3 | 3.7 |
| Example 28 | 0.2 | 2.1 |

## Claims

1. A multi-layer dye-scavenging article comprising:
at least a first layer, and a second layer positioned adjacent to each other, optionally additional layers, wherein a dye absorbing compound is fixed to one of the first and second layers, wherein the first layer has a basis weight of from 10 gsm to 200 gsm and the second layer has a basis weight of from 30gsm to 200 gsm and wherein
multi-layer dye-scavenging article is further **characterized In that** the article has a sufficient stiffness to prevent it from folding on itself during use.

2. A multi-layer dye-scavenging article according to claim 1 further comprising a means of coupling the first layer with second layer and the second layer to optional layers.

3. A multi-layer dye-scavenging article according to claim 2 wherein the means of coupling is selected from the group consisting of adhesives, heat bonds, pressure bonds, extrusion, ultrasonic bonds, and mixtures thereof.

4. A multi-layer dye-scavenging article according to claim 1 comprising:
a) at least a first layer wherein said first layer has a basis weight of from 10 gsm to 200 gsm;
b) a second layer wherein said second layer has a basis weight of from 30 gsm to 200 gsm, and
c) optionally additional layers; wherein said additional layers have a basis weight of from 10 gsm to 200 gsm;
wherein a dye absorbing compound is fixed to the second layer.

5. A multi-layer dye-scavenging article according to claim 4 wherein the basis weight of the first layer is from 20 gsm to 100 gsm.

6. A multi-layer dye-scavenging article according to claim 4 wherein the basis weight of the first layer is from 20 gsm to 50 gsm.

7. A multi-layer dye-scavenging article according to claim 4 wherein the basis weight of the second layed is from 60 gsm to 150 gsm.

8. A multi-layer dye-scavenging article according to claim 4 wherein the basis weight of the second layer is from 80 gsm to 120 gsm.

9. A multi-layer dye-scavenging article according to claim 1 comprising:
a) at least first layer wherein said first layer has an opacity of less than 70%;
b) a second layer; and
c) optionally additional layers;
wherein a dye absorbing compound is fixed to the second layer.

10. A multi-layer dye-scaveriging article according to claim 9 wherein the first layer has an opacity of less than 50%.

11. A multi-layer dye-scavenging article according to claim 1 wherein the first layer, the second layer and optional layers are non-woven materials.

12. A multi-layer dye-scavenging article according to claim 1 wherein the first layer, the second layer and optional layers are made independently of each other and subsequently coupled to each other.

13. A multi-layer dye-scavenging according to claim 1 wherein the first layer, the second layer and optional layers are made as a single air-laid non-woven web.

14. A multi-layer dye-scavenging article according to claim 1 wherein the first layer, and the second layer are made as a single air-laid non-woven web.

15. A multi-layer dye-scavenging article according to claim 1 wherein the second and third layers are made as a single air-laid non-woven web.

16. A multi-layer dye-scavenging article according to claim 1 wherein the first layer and additional layers are made as a single air-laid non-woven web.

17. A multi-layer dye-scavenging article according to claim 1, claim 4 or claim 9
wherein the first, second, and optional layers have a melting point of greater than or equal to 100°C.

18. A multi-layer dye-scavenging article according to claim 1, claim 4 or claim 9
wherein the first, second, and optional layers have a water permeability of greater than or equal to 0.06 ml/see/cm².

19. A multi-layer dye-scavenging article according to claim 1, claim 4 or claim 9
wherein the first, second, and optional layers have a Taber stiffness rating of from 7 TSU to 200 TSU.

## Patentansprüche

1. Mehrschichtiger farbstofffangender Artikel, umfassend:
mindestens eine erste Schicht, und eine zweite Schicht, die aneinander angrenzen, wahlweise zusätzliche Schichten, wobei eine farbstoffabsorbierende Verbindung an einer der ersten und der zweiten Schicht angebracht ist, wobei die erste Schicht ein Flächengewicht von 10 g/m² bis 200 g/m² aufweist und die zweite Schicht ein Flächengewicht von 30 g/m² bis 200 g/m² aufweist und wobei der mehrschichtige farbstofffangende Artikel ferner **dadurch gekennzeichnet ist, dass** der Artikel eine ausreichende Steifigkeit aufweist, um zu verhindern, dass er sich während des Gebrauchs faltet.

2. Mehrschichtiger farbstofffangender Artikel nach Anspruch 1, der ferner ein Mittel zum Koppeln der ersten Schicht mit der zweiten Schicht und der zweiten Schicht mit fakultativen Schichten umfasst.

3. Mehrschichtiger farbstofffangender Artikel nach Anspruch 2, wobei das Kopplungsmittel ausgewählt ist aus der Gruppe bestehend aus Klebstoffen, Heißverklebungen, Druckbindungen, Extrusion, Ultraschallbindungen und Mischungen davon.

4. Mehrschichtiger farbstofffangender Artikel nach Anspruch 1, umfassend:
a) mindestens eine erste Schicht, wobei die erste Schicht ein Flächengewicht von 10 g/m² bis 200 g/m² aufweist;
b) eine zweite Schicht, wobei die zweite Schicht ein Flächengewicht von 30 g/m² bis 200 g/m² aufweist, und
c) wahlweise zusätzliche Schichten; wobei die zusätzlichen Schichten ein Flächengewicht von 10 g/m² bis 200 g/m² aufweisen; wobei eine farbstoffabsorbierende Verbindung an der zweiten Schicht angebracht ist.

5. Mehrschichtiger farbstofffangender Artikel nach Anspruch 4, wobei das Flächengewicht der ersten Schicht von 20 g/m² bis 100 g/m² beträgt.

6. Mehrschichtiger farbstofffangender Artikel nach Anspruch 4, wobei das Flächengewicht der ersten Schicht von 20 g/m² bis 50 g/m² beträgt.

7. Mehrschichtiger farbstofffangender Artikel nach Anspruch 4, wobei das Flächengewicht der zweiten Schicht von 60 g/m² bis 150 g/m² beträgt.

8. Mehrschichtiger farbstofffangender Artikel nach Anspruch 4, wobei das Flächengewicht der zweiten Schicht von 80 g/m² bis 120 g/m² beträgt.

9. Mehrschichtiger farbstofffangender Artikel nach Anspruch 1, umfassend:
a) mindestens eine erste Schicht, wobei die erste Schicht eine Trübung von weniger als 70 % aufweist;
b) eine zweite Schicht; und
c) wahlweise zusätzliche Schichten;
wobei eine farbstoffabsorbierende Verbindung an der zweiten Schicht angebracht ist.

10. Mehrschichtiger farbstofffangender Artikel nach Anspruch 9, wobei die erste Schicht eine Trübung von weniger als 50 % aufweist.

11. Mehrschichtiger farbstofffangender Artikel nach Anspruch 1, wobei die erste Schicht, die zweite Schicht und fakultative Schichten Vliesmaterialien sind.

12. Mehrschichtiger farbstofffangender Artikel nach Anspruch 1, wobei die erste Schicht, die zweite Schicht und fakultative Schichten unabhängig voneinander hergestellt werden und anschließend aneinander gekoppelt werden.

13. Mehrschichtiger farbstofffangender Artikel nach Anspruch 1, wobei die erste Schicht, die zweite Schicht und fakultative Schichten als eine einzige luftgelegte Vliesbahn hergestellt werden.

14. Mehrschichtiger farbstofffangender Artikel nach Anspruch 1, wobei die erste Schicht und die zweite Schicht als eine einzige luftgelegte Vliesbahn hergestellt werden.

15. Mehrschichtiger farbstofffangender Artikel nach Anspruch 1, wobei die zweite und die dritte Schicht als eine einzige luftgelegte Vliesbahn hergestellt werden.

16. Mehrschichtiger farbstofffangender Artikel nach Anspruch 1, wobei die erste Schicht und zusätzliche Schichten als eine einzige luftgelegte Vliesbahn hergestellt werden.

17. Mehrschichtiger farbstofffangender Artikel nach Anspruch 1, Anspruch 4 oder Anspruch 9,
wobei die erste, die zweite und fakultative Schichten einen Schmelzpunkt von mehr als oder gleich 100 °C aufweisen.

18. Mehrschichtiger farbstofffangender Artikel nach Anspruch 1, Anspruch 4 oder Anspruch 9,
wobei die erste, die zweite und fakultative Schichten eine Wasserdurchlässigkeit von mehr als oder gleich 0,06 ml/s/cm² aufweisen.

19. Mehrschichtiger farbstofffangender Artikel nach Anspruch 1, Anspruch 4 oder Anspruch 9,
wobei die erste, die zweite und wahlweise Schichten eine Taber-Steifigkeit von 7 TSU bis 200 TSU aufweisen.

## Revendications

1. Article multicouche de piégeage des colorants, comprenant :
au moins une première couche, et une deuxième couche, positionnées de façon adjacente l'une par rapport à l'autre, facultativement des couches supplémentaires, dans lequel un composé absorbant les teintures est fixé à l'une des première et deuxième couches, où la première couche a un poids de base allant de 10 g/m² à 200 g/m² et la deuxième couche a un poids de base allant de 30 g/m² à 200 g/m² et où l'article multicouche de piégeage des colorants est **caractérisé en outre en ce que** l'article a une rigidité suffisante pour l'empêcher de se replier sur lui-même durant l'utilisation.

2. Article multicouche de piégeage des colorants selon la revendication 1, comprenant en outre un moyen de couplage de la première couche à la deuxième couche et la deuxième couche à des couches facultatives.

3. Article multicouche de piégeage des colorants selon la revendication 2, dans lequel le moyen de couplage est choisi dans le groupe constitué d'adhésifs, liaisons thermiques, liaisons par pression, extrusion, liaisons par ultrasons et des mélanges de ceux-ci.

4. Article multicouche de piégeage des colorants selon la revendication 1, comprenant :
a) au moins une première couche, où ladite première couche a une masse surfacique allant de 10 g/m² à 200 g/m² ;
b) une deuxième couche, où ladite deuxième couche a une masse surfacique allant de 30 g/m² à 200 g/m², et
c) facultativement des couches supplémentaires ; où lesdites couches supplémentaires ont une masse surfacique allant de 10 g/m² à 200 g/m² ; dans lequel un composé absorbant les teintures est fixé à la deuxième couche.

5. Article multicouche de piégeage des colorants selon la revendication 4, dans lequel la masse surfacique de la première couche va de 20 g/m² à 100 g/m².

6. Article multicouche de piégeage des colorants selon la revendication 4, dans lequel la masse surfacique de la première couche va de 20 g/m² à 50 g/m².

7. Article multicouche de piégeage des colorants selon la revendication 4, dans lequel la masse surfacique de la deuxième couche va de 60 g/m² à 150 g/m².

8. Article multicouche de piégeage des colorants selon la revendication 4, dans lequel la masse surfacique de la deuxième couche va de 80 g/m² à 120 g/m².

9. Article multicouche de piégeage des colorants selon la revendication 1, comprenant :
a) au moins une première couche, dans lequel ladite première couche a une opacité de moins de 70 % ;
b) une deuxième couche, et
c) facultativement des couches supplémentaires ;
dans lequel un composé absorbant les teintures est fixé à la deuxième couche.

10. Article multicouche de piégeage des colorants selon la revendication 9, dans lequel la première couche a une opacité de moins de 50 %.

11. Article multicouche de piégeage des colorants selon la revendication 1, dans lequel la première couche, la deuxième couche et les couches facultatives sont des matériaux non tissés.

12. Article multicouche de piégeage des colorants selon la revendication 1, dans lequel la première couche, la deuxième couche et les couches facultatives sont fabriquées indépendamment l'une de l'autre et couplées ultérieurement l'une à l'autre.

13. Article multicouche de piégeage des colorants selon la revendication 1, dans lequel la première couche, la deuxième couche et les couches facultatives sont fabriquées en tant que nappe non tissée unique appliquée par jet d'air.

14. Article multicouche de piégeage des colorants selon la revendication 1, dans lequel la première couche et la deuxième couche sont fabriquées en tant que nappe non tissée unique appliquée par jet d'air.

15. Article multicouche de piégeage des colorants selon la revendication 1, dans lequel les deuxième et troisième couches sont fabriquées en tant que nappe non tissée unique appliquée par jet d'air.

16. Article multicouche de piégeage des colorants selon la revendication 1, dans lequel la première couche et les couches supplémentaires sont fabriquées en tant que nappe non tissée unique appliquée par jet d'air.

17. Article multicouche de piégeage des colorants selon la revendication 1, la revendication 4 ou la revendication 9
dans lequel les première, deuxième couches, ainsi que les couches facultatives ont un point de fusion supérieur ou égal à 100 °C.

18. Article multicouche de piégeage des colorants selon la revendication 1, la revendication 4 ou la revendication 9
dans lequel les première, deuxième couches, ainsi que les couches facultatives ont une perméabilité à l'eau supérieure ou égale à 0,06 ml/sec/cm².

19. Article multicouche de piégeage des colorants selon la revendication 1, la revendication 4 ou la revendication 9
dans lequel les première, deuxième couches, ainsi que les couches facultatives ont un taux de rigidité Taber allant de 7 TSU à 200 TSU.
